# FASCICULE DE BREVET EUROPEEN

(11) **EP 2 834 475 B1**
(45) Date de publication et mention de la délivrance du brevet: **10.07.2019**
(21) Numéro de dépôt: 13719960.0
(22) Date de dépôt: 29.03.2013
(51) Int. Cl.: F01D 25/16, F02C 7/32, F02C 7/36

(54) **SYSTÈME DE TRANSMISSION DE PUISSANCE POUR UNE TURBOMACHINE ET PROCÉDÉ CORRESPONDANT**
KRAFTÜBERTRAGUNGSSYSTEM FÜR EINE TURBOMASCHINE UND ENTSPRECHENDES VERFAHREN
POWER TRANSMISSION SYSTEM FOR A TURBOMACHINE AND CORRESPONDING METHOD

(30) Priorité: 06.04.2012 FR 1253241
(43) Date de publication de la demande: 11.02.2015
(73) Titulaire: Safran Aircraft Engines, 75015 Paris (FR); Safran Transmission Systems, 92700 Colombes (FR)
(72) Inventeur: PETTINOTTI, Serge, Dominique, F-92400 Courbevoie (FR); ABOUSLEIMAN, Vincent, F-92700 Colombes (FR); BOURGET, Sébastien, F-77550 Moissy Cramayel Cedex (FR)
(74) Mandataire: Jolly, Christophe
(86) Numéro de dépôt international: PCT/FR2013/050715
(87) Numéro de publication internationale: WO 2013/150229

(56) Documents cités:
- EP-A1- 1 898 072
- DE-A1- 2 543 258
- FR-A1- 2 333 955
- GB-A- 2 055 992
- JP-A- 2003 269 192

## Description

L'invention concerne un système de transmission de puissance ainsi qu'une turbomachine équipée d'un tel système.

Des documents FR 2 333 955, JP 2003-269192, GB 2 055 992 A et DE 25 43 258, des systèmes de transmission de puissance de turbomachine sont connus.

Classiquement, une turbomachine comprend une soufflante amont, un compresseur basse pression, un compresseur haute pression, une chambre de combustion, une turbine haute pression et une turbine basse pression. Un carter intermédiaire structural est agencé entre les compresseurs basse pression et haute pression et comprend des bras s'étendant radialement à travers le flux d'air primaire circulant à l'intérieur des compresseurs, de la chambre de combustion et des turbines et à travers le flux d'air secondaire contournant le turboréacteur.

Un arbre de transmission de puissance est relié à l'arbre du compresseur haute pression par l'intermédiaire de moyens de liaison tels que des engrenages de renvoi d'angle, et s'étend radialement à l'intérieur d'un bras radial du carter intermédiaire pour l'entraînement de divers équipements et accessoires.

Dans la technique actuelle, l'arbre de transmission est dimensionné de manière à ce que sa première vitesse de résonance soit supérieure à la vitesse maximale de rotation en fonctionnement. Dans cette configuration, l'arbre de transmission est dit fonctionner en régime « sous critique » et ne peut entrer en résonance en fonctionnement, ce qui limite les vibrations de l'arbre de transmission.

Toutefois, pour un fonctionnement sous critique de l'arbre de transmission, il faut dimensionner cet arbre avec un diamètre minimal de manière à lui donner une rigidité suffisante, ce qui augmente sa masse. Ce diamètre minimal de l'arbre de transmission impose une section minimale du bras radial dans lequel il est logé.

Or, le bras radial logeant l'arbre de transmission doit permettre un bon écoulement des flux d'air primaire et secondaire dans lesquels il s'étend, ce qui est difficile à obtenir avec un bras radial ayant une section importante et réduit les performances aérodynamiques et donc le rendement de la turbomachine.

La présente invention a notamment pour but d'apporter une solution simple, efficace et économique à ces problèmes de la technique actuelle.

A cet effet, elle propose une turbomachine selon la revendication 1, comprenant un arbre de transmission relié à un arbre moteur par des moyens de liaison, tels par exemple que des engrenages de renvoi d'angle, et qui entraîne des équipements ou des accessoires, caractérisé en ce que l'arbre de transmission est destiné à fonctionner en régime supercritique et comprend des moyens d'amortissement des vibrations à sa vitesse de résonance.

De nombreux paramètres interdépendants de l'arbre comme la masse, le matériau, la section, la longueur, la forme, etc., influent sur la vitesse de résonance. En particulier, une diminution de section de l'arbre permet de diminuer la vitesse de résonance.

Selon l'invention, l'arbre du système de transmission de puissance est dimensionné de manière à ce qu'au moins sa première vitesse de résonance soit située dans la plage des vitesses de rotation en fonctionnement de l'arbre de transmission, ce qui permet de réduire sa section et donc sa masse et son encombrement, sans qu'il se produise de problèmes au passage par la vitesse de résonance grâce aux moyens d'absorption des vibrations prévus par l'invention. Dans une turbomachine, il devient possible de réduire la section du bras radial du carter intermédiaire logeant l'arbre de transmission, ce qui permet d'améliorer les performances aérodynamiques et d'augmenter le rendement de la turbomachine.

Selon une autre caractéristique de l'invention, les moyens d'amortissement sont montés de manière amovible dans un boîtier porté par un élément de structure fixe, le boitier amovible pouvant ainsi être retiré pour le démontage de l'arbre de transmission et des moyens d'amortissement, ce qui facilite les opérations de maintenance.

Avantageusement, le boîtier est intégré de manière amovible dans un boîtier des moyens de liaison de l'arbre de transmission aux équipements à entraîner.

Dans un mode de réalisation de l'invention, les moyens d'amortissement des vibrations comprennent un amortisseur à compression d'un film d'huile.

Préférentiellement, l'amortisseur à compression d'un film d'huile est formé autour d'un palier de guidage de l'arbre de transmission.

Dans une réalisation particulière de l'invention, le film d'huile de l'amortisseur est formé dans un espace annulaire entre une surface annulaire interne du boitier amovible et une pièce annulaire entourant une bague externe du palier de guidage.

Selon une autre caractéristique de l'invention, le film d'huile est confiné latéralement par au moins deux joints annulaires d'étanchéité engagés dans des logements annulaires de la pièce annulaire et/ou du boitier amovible.

Selon encore une autre caractéristique de l'invention, le palier de guidage est engagé sur une portée cylindrique de l'arbre et maintenu axialement à une extrémité par un écrou vissé sur une partie filetée de la portée cylindrique ou de la pièce annulaire et à son autre extrémité par un rebord radial de l'arbre de transmission.

Selon l'invention, l'arbre de transmission s'étend dans un bras radial d'un carter intermédiaire.

Avantageusement, les moyens d'amortissement sont montés de manière amovible autour de l'extrémité radialement externe de l'arbre de transmission, ce qui évite d'augmenter la section du bras radial servant au passage de l'arbre de transmission par rapport à un montage des moyens d'amortissement dans le bras radial.

Préférentiellement, les moyens d'amortissement sont montés dans un boitier amovible autour de l'extrémité radialement externe de l'arbre de transmission et à l'intérieur d'une ouverture d'une structure fixe portée par le carter intermédiaire.

Ce montage du boitier amovible sur l'extrémité radialement externe de l'arbre de transmission permet un démontage simple et rapide du boitier amovible et de l'arbre de transmission pour réaliser des opérations de maintenance. De plus, en fonctionnement, l'écoulement du flux d'air secondaire circulant autour des bras radiaux peut conduire à des déformations du carter intermédiaire. Le montage du boitier amovible en position radialement externe permet de limiter l'impact des déformations du carter intermédiaire sur les moyens d'amortissement, garantissant ainsi un fonctionnement optimal des moyens d'amortissement.

L'invention concerne également un procédé, selon la revendication 11, de transmission de puissance à des équipements ou accessoires d'une turbomachine telle qu'un turboréacteur ou un turbopropulseur d'avion, au moyen d'un arbre de transmission relié à un arbre moteur par des moyens de liaison, caractérisé en ce qu'il consiste à faire tourner l'arbre de transmission à une vitesse supercritique et à amortir les vibrations lors de son fonctionnement à sa vitesse de résonance.

D'autres avantages et caractéristiques de l'invention apparaîtront à la lecture de la description suivante faite à titre d'exemple non limitatif et en référence aux dessins annexés dans lesquels :
- la figure 1 est une vue schématique en coupe axiale d'une turbomachine ;
- la figure 2 est une vue schématique en coupe axiale de la partie d'extrémité radialement externe de l'arbre de transmission et des moyens de liaison aux équipements de la turbomachine ;
- la figure 3 est une vue schématique en coupe axiale et à plus grande échelle de la zone délimitée en pointillés sur la figure 2,
- la figure 4 est une vue schématique en perspective et en coupe des moyens d'amortissement montés dans un boitier amovible à l'extrémité radialement externe de l'arbre de transmission selon une variante de réalisation de l'invention,
- la figure 5 est une vue schématique en coupe du boitier de la figure 4,
- les figures 6 et 7 sont des vues schématiques en perspective des moyens de liaison logeant les moyens d'amortissement selon une autre variante de l'invention,
- la figure 8 est une vue schématique en coupe du boitier de la figure 6.

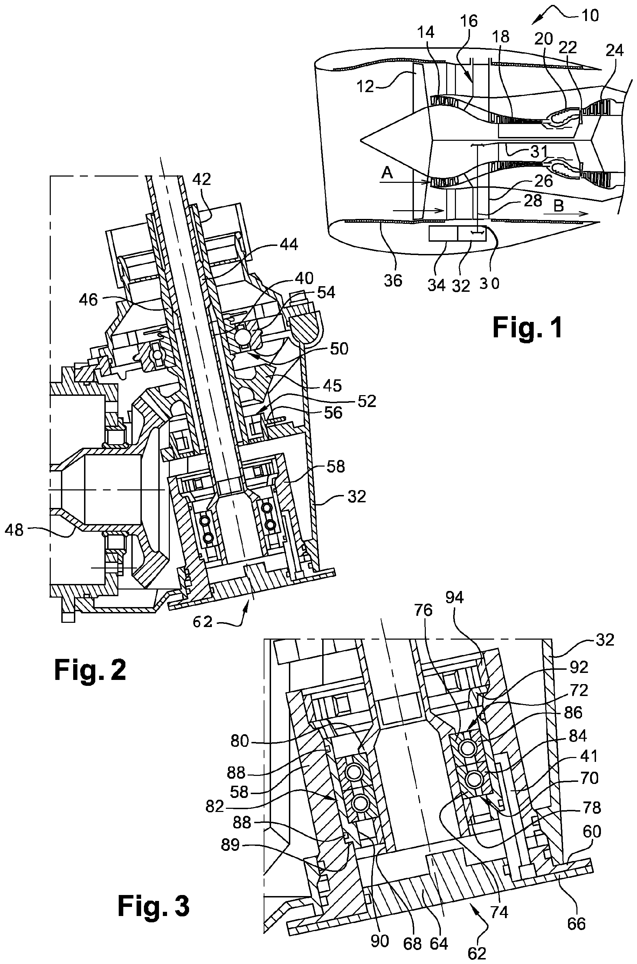

On se réfère tout d'abord à la figure 1, qui représente une turbomachine 10 comprenant d'amont en aval une soufflante 12, un compresseur basse pression 14, un carter intermédiaire 16, un compresseur haute pression 18, une chambre de combustion 20, une turbine haute pression 22 et une turbine basse pression 24. L'air entrant dans la turbomachine se divise en un flux d'air primaire (flèches A) qui circule à l'intérieur des compresseurs basse et haute pression 14, 18 vers la chambre de combustion 20 puis à travers les turbines haute et basse pression 22, 24, et en un flux d'air secondaire (flèches B) qui contourne le compresseur 14, 18, la chambre de combustion 20 et la turbine 22, 24.

Le carter intermédiaire 16 comprend des bras structuraux 26 s'étendant radialement vers l'extérieur à travers les flux d'air primaire (flèche A) et secondaire (flèche B). Un des bras 26 du carter intermédiaire 16 contient un arbre radial 28 de transmission de puissance dont l'extrémité interne est reliée à rotation à l'arbre 31 du compresseur haute pression 18 par des moyens de liaison interne. L'extrémité radialement externe de l'arbre de transmission 28 est reliée par des moyens de liaison externe 30 à des équipements tels que, par exemple, une unité de lubrification, une pompe hydraulique, un démarreur, un générateur, etc.

Les moyens de liaison externe 30 sont agencés dans un boitier 32 adjacent au boitier 34 logeant les équipements à entrainer.

Le boitier 32 des moyens de liaison 30 et le boitier d'accessoires 34 sont portés par un carter de soufflante 36 et par une virole annulaire externe 38 du carter intermédiaire 16.

En fonctionnement, l'arbre de transmission 28 assure une transmission de puissance depuis l'arbre 31 d'entrainement du compresseur haute pression vers les équipements qui en ont besoin et qui sont logés dans le boitier 34.

Afin de limiter les vibrations de l'arbre de transmission 28, celui-ci doit avoir un diamètre suffisant de manière à avoir une rigidité suffisante afin d'éviter qu'une vitesse de résonance soit comprise dans la plage des vitesses de rotation en fonctionnement.

Il s'ensuit que le bras radial 26 de passage de l'arbre de transmission 28 doit aussi avoir une section suffisamment importante pour le logement de l'arbre de transmission 28, ce qui réduit les performances aérodynamiques autour du bras radial 26 et diminue le rendement de la turbomachine 10.

L'invention apporte une solution à ce problème en réalisant un système de transmission de puissance dans lequel l'arbre de transmission 40 est destiné à fonctionner en régime super-critique, c'est-à-dire avec au moins une vitesse de résonance comprise dans la plage des vitesses de rotation en fonctionnement de l'arbre de transmission 40, et en ajoutant des moyens d'amortissement limitant les vibrations de l'arbre de transmission 40 au passage par la vitesse de résonance.

La figure 2 représente la partie radialement externe de l'arbre de transmission 40 d'un système de transmission selon l'invention.

La partie radialement externe de l'arbre de transmission 40 est montée dans un arbre tubulaire 42 des moyens de liaison. L'arbre de transmission 40 est couplé en rotation à l'arbre tubulaire 42 par l'intermédiaire de cannelures 44 formées sur la surface externe de l'arbre de transmission 40 et de cannelures 46 correspondantes formées sur la surface interne de l'arbre tubulaire 42.

L'arbre tubulaire 42 comprend sur sa périphérie externe un pignon conique 45 en prise avec un pignon conique 46 d'un arbre 48 de renvoi de puissance vers les équipements. Le pignon conique 45 de l'arbre tubulaire 42 est intercalé entre deux paliers à roulements 50, 52 montés de part et d'autre du pignon conique 45. Chaque palier 50, 52 comprend une bague externe 54, 56 solidaire du boitier 32 logeant les moyens de liaison 30.

Le système de transmission 30 selon l'invention comprend un boitier amovible 58 inséré dans une ouverture du boitier 32 des moyens de liaison 30 et engagé autour de l'extrémité radialement externe de l'arbre de transmission 40. Le boitier amovible 58 comprend un rebord annulaire externe 60 appliqué sur le pourtour externe de l'ouverture du boitier 32 des moyens de liaison. Le boitier amovible 58 a une forme sensiblement en cylindre ouvert à ses deux extrémités. L'ouverture du boitier amovible 58 débouchant à l'extérieur du boitier 32 des moyens de liaison est obturée par un couvercle 62 comprenant une partie centrale 64 engagée à étanchéité à l'intérieur de l'ouverture du boitier amovible 58 et reliée sur son pourtour extérieur à un rebord annulaire 66 appliqué sur le rebord annulaire 60 du boitier amovible.

L'extrémité radialement externe de l'arbre de transmission 40 comprend une portée cylindrique 68 sur laquelle sont montés un premier et un second paliers 70, 72 axialement superposés, tels que des roulements à billes. Les bagues internes 74, 76 des premier et second paliers 70, 72 sont bloquées axialement par un écrou 78 vissé sur un filetage de l'extrémité libre de la portée cylindrique 68 et par un rebord annulaire 80 en saillie radiale formée à l'autre extrémité de la portée cylindrique 68.

Une pièce annulaire 82 est montée autour des bagues externes 84, 86 des paliers 70, 72 de manière à ménager un espace annulaire entre la surface externe de la pièce annulaire 82 et une surface interne du boitier amovible 58. Cet espace annulaire est fermé axialement par des joints annulaires d'étanchéité 88 montés dans des gorges annulaires de la surface externe de la pièce annulaire 82.

L'espace annulaire est rempli d'huile pour former un amortisseur à compression d'un film d'huile qui absorbe les vibrations de l'arbre de transmission 40 au passage par sa vitesse de résonance. L'huile est amenée par au moins un canal 41 formé dans l'épaisseur du boitier amovible et débouchant au niveau de l'espace annulaire. Ce canal est relié à des moyens d'alimentation en huile.

La pièce annulaire 82 est bloquée axialement dans le boitier amovible 58 à son extrémité située du côté de l'extrémité libre de l'arbre de transmission 40 sur un épaulement 89 de la surface interne du boîtier amovible 58. La pièce annulaire 82 comprend un rebord annulaire 90 à cette même extrémité sur lequel la bague externe 84 du premier palier 70 est bloquée axialement.

A son autre extrémité, la pièce annulaire est bloquée axialement par une cale annulaire 92 et par un écrou 94 de blocage de la cale 92, cet écrou 94 portant un filetage sur sa surface externe qui est vissé sur un filetage correspondant de la surface interne du boitier amovible 58.

Le montage du boitier amovible 58 et des moyens d'amortissement à compression d'un film d'huile autour de l'extrémité radialement externe de l'arbre de transmission 40 se fait de la manière suivante : la pièce annulaire 82 est insérée en translation à l'intérieur du boitier amovible 58 de manière à venir en butée sur l'épaulement 89 puis l'opérateur insère successivement les premier et second paliers 70, 72, la cale 92 est ensuite insérée puis l'écrou 94 est vissé dans le boitier amovible 58. Le boitier amovible 58 ainsi équipée est monté sur l'arbre de transmission 40 de manière à ce que les bagues internes 74, 76 des premier 70 et second 72 paliers coulissent sur la portée cylindrique 68 jusqu'à ce que la bague interne 76 du second palier 72 vienne en butée sur le rebord radial 80 de l'arbre de transmission 40. L'écrou 78 est ensuite vissé sur l'extrémité libre de la portée cylindrique 68, ce qui immobilise les premier 70 et second 72 paliers sur l'arbre de transmission 40. L'ensemble formé de l'arbre de transmission 40 et du boitier amovible 58 est ensuite inséré dans l'ouverture du boitier 32 des moyens de liaison jusqu'à ce que le rebord annulaire 60 du boitier amovible 58 vienne s'appliquer sur le pourtour externe de l'ouverture du boitier 32 des moyens de liaison. Enfin, dans une dernière étape, le couvercle 62 est monté sur le boitier amovible 58 de manière à obturer son ouverture comme représenté aux figures 2 et 3.

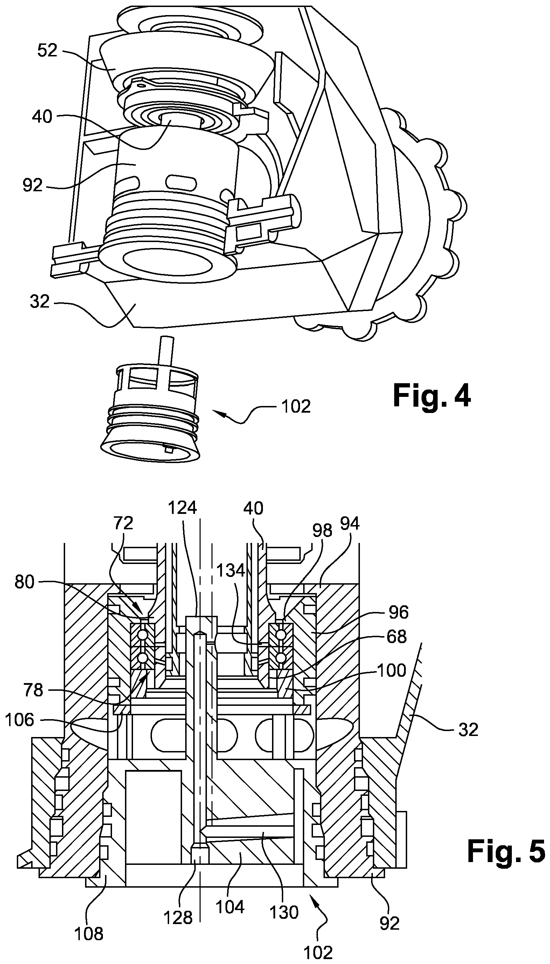

Les figures 4 et 5 représentent une variante de réalisation de l'invention. Dans cette variante, le boitier 92 a également une forme sensiblement cylindrique et comprend un rebord radial 94 à son extrémité située à l'intérieur du boitier des moyens de liaison 32. La pièce annulaire 96 comprend un rebord annulaire radial 98 situé en vis-à-vis du rebord annulaire radial 80 de l'arbre de transmission de puissance 40. Un écrou 100 est vissé sur la face interne de la pièce annulaire 96 et à son extrémité située à l'opposé de son rebord annulaire 98, l'écrou 100 venant s'appliquer sur la bague externe 84 du premier palier 70. Le couvercle 102 est représenté en position démontée sur la figure 4 et comprend également une partie médiane 104 engagée à étanchéité à l'intérieur du boitier amovible 92 comme représenté sur la figure 5. L'extrémité 106 du couvercle 102 opposée à son rebord 108 vient en appui sur la pièce annulaire 96 pour la maintenir axialement en position dans le boitier amovible 92.

Dans cette variante de réalisation de l'invention, le montage s'effectue de la manière suivante : la pièce annulaire 96 est insérée à l'intérieur du boitier amovible 92 de manière à venir en butée sur le rebord annulaire radial 94 du boitier amovible 92. Les premier 72 et second 78 paliers sont montés entre la portée cylindrique 68 de l'arbre de transmission 70 et la pièce annulaire 96, l'écrou 100 étant ensuite vissé sur la pièce annulaire 96. L'ensemble formé de l'arbre de transmission 40 et du boitier amovible 92 est ensuite inséré dans l'ouverture du boitier 32 des moyens de liaison. Le couvercle 102 est enfin monté sur le boitier amovible 92.

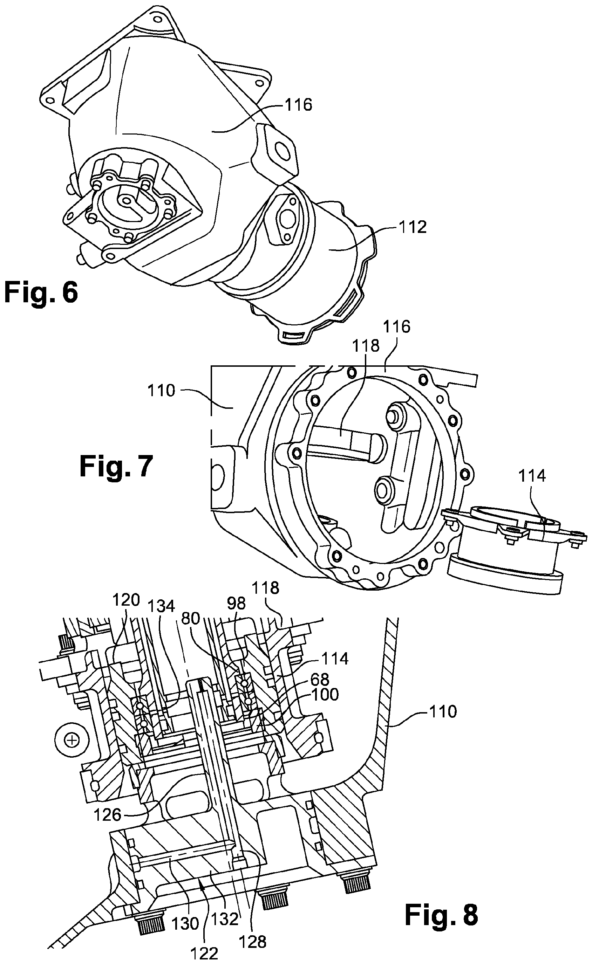

Les figures 6 et 7 représentent une autre variante de réalisation de l'invention. La figure 6 représente le boitier 110 des moyens de liaison fixé au boitier 112 des moyens d'accessoires. Dans cette variante, le boitier 114 logeant les moyens d'amortissement est monté par l'ouverture 116 servant au passage de l'arbre de renvoi de puissance vers les équipements et est vissé sur une partie fixe 118 située à l'intérieur du boitier 110 des moyens de liaison.

A la différence des deux réalisations décrites précédemment, le boitier 114 est intégralement logé à l'intérieur du boitier 110 des moyens de liaison et n'est pas monté par l'ouverture du boitier 110 servant à l'introduction de l'arbre de transmission de puissance. Dans cette configuration, le démontage du boitier 114 logeant les moyens d'amortissement nécessite donc le démontage du boitier d'accessoires 112.

Dans cette variante de l'invention, le montage s'effectue de la manière suivante : le boitier 114 est monté par l'orifice 116 de passage de l'arbre de renvoi de puissance. La pièce annulaire 120 ainsi que les paliers de roulement 72, 78 sont ensuite montés autour de la portée cylindrique 68 de l'arbre puis l'écrou 100 est vissé sur la pièce annulaire 120. Cet ensemble monté sur l'arbre de transmission de puissance 40 est inséré à l'intérieur du boitier 114, puis le couvercle 122 est monté de manière à ce que son extrémité interne vienne s'appliquer sur la pièce annulaire et de manière à obturer l'ouverture du boitier des moyens de liaison.

Comme représenté sur les figures 5 et 7, le couvercle 102, 122 peut comprendre un doigt axial 124, 126 s'étendant à l'intérieur de l'arbre de transmission de puissance 40 et comprenant au moins un canal interne 128 coopérant avec un ou des canaux 130 de la partie médiane 104, 132 du couvercle 102, 122. Ces canaux 130 sont reliés à des moyens d'alimentation en huile pour que de l'huile puisse circuler jusqu'à l'extrémité libre du doigt 124, 126 et soit projetée à l'intérieur de l'arbre. Cette huile circule ensuite jusqu'aux paliers de roulement 72, 78 par l'intermédiaire d'orifices 134 formés dans l'arbre.

Par rapport à la technique antérieure, l'invention permet de réduire la dimension radiale de l'arbre de transmission 40 et celle du bras radial du carter intermédiaire dans lequel il est logé. Il est ainsi plus facile de conformer le bras radial de manière à ce qu'il permette un bon écoulement de l'air en fonctionnement. La réduction de la dimension radiale de l'arbre 40 permet son fonctionnement en mode supercritique sans que cela pose de difficultés au passage par la vitesse de résonance du fait de la présence de moyens d'amortissement des vibrations.

L'utilisation d'un boitier amovible 58 agencé à l'extrémité radialement externe de l'arbre de transmission 40 facilite les d'opérations de maintenance, en particulier lorsque le boitier peut être retiré sans démontage du boitier d'accessoires et du boitier des moyens de liaison. Dans toutes les configurations représentées aux figures, les moyens d'amortissement sont montés à l'extrémité radialement externe de l'arbre, ce qui facilite leur démontage.

Enfin, en fonctionnement, les carters et en particulier le carter intermédiaire se déforment sous l'effet des forces aérodynamiques, ce qui peut conduire à un désalignement entre les moyens de liaison interne et les moyens de liaison externe. Selon l'invention, le montage des moyens d'amortissement dans un boitier 58, 92, 114 rendu solidaire en fonctionnement du boitier des moyens de liaison externe et du carter intermédiaire, rend les moyens d'amortissement insensibles à ces déformations, ce qui assure un fonctionnement optimal des moyens d'amortissement.

Dans d'autres réalisations de l'invention, les moyens d'amortissement des vibrations pourraient être montés à l'extrémité radialement interne de l'arbre de transmission 40 mais cela ne présenterait pas la même facilité de montage et démontage qu'avec un agencement à l'extrémité radialement externe de l'arbre de transmission 40 comme décrit en référence aux figures 2 et 3. Dans d'autres variantes de réalisation de l'invention, les paliers à roulements peuvent être du type à roulement à billes tels que par exemple ceux à contacts coniques permettant de reprendre simultanément les charges radiales et axiales.

## Revendications

1. Turbomachine comprenant un carter intermédiare (16), des bras radiaux (26) et au moins un système de transmission de puissance, en particulier pour une turbomachine telle qu'un turboréacteur ou un turbopropulseur d'avion, comprenant un arbre de transmission (40) s'étendant dans un bras radial (26) du carter intermédiaire (16) et relié à un arbre moteur (31) par des moyens de liaison (30), tels par exemple que des engrenages de renvoi d'angle, et qui entraîne des équipements ou des accessoires, **caractérisée en ce que** l'arbre de transmission (40) est destiné à fonctionner en régime supercritique et comprend des moyens d'amortissement des vibrations à sa vitesse de résonance.

2. Turbomachine selon la revendication 1, **caractérisée en ce que** les moyens d'amortissement sont montés de manière amovible dans un boîtier (58, 92, 114) porté par un élément de structure fixe.

3. Turbomachine selon la revendication 2, **caractérisée en ce que** le boîtier (58, 92, 114) est intégré de manière amovible dans un boîtier (32) des moyens de liaison de l'arbre de transmission (40) aux équipements ou accessoires à entraîner.

4. Turbomachine selon la revendication 2 ou 3, **caractérisée en ce que** les moyens d'amortissement des vibrations comprennent un amortisseur à compression d'un film d'huile.

5. Turbomachine selon la revendication 4, **caractérisée en ce que** l'amortisseur à compression d'un film d'huile est formé autour d'au moins un palier (70, 72) de guidage de l'arbre de transmission (40).

6. Turbomachine selon la revendication 5, **caractérisée en ce que** le film d'huile de l'amortisseur est formé dans un espace annulaire entre une surface annulaire interne du boitier amovible (58, 92, 114) et une pièce annulaire (82, 96, 120) entourant une bague externe (84, 86) du palier de guidage.

7. Turbomachine selon la revendication 6, **caractérisée en ce que** le film d'huile est confiné latéralement par au moins deux joints annulaires d'étanchéité (88) engagés dans des logements annulaires de la pièce annulaire et/ou du boitier amovible (58).

8. Turbomachine selon la revendication 5 ou 6, **caractérisée en ce que** le palier de guidage (70, 72) est engagé sur une portée cylindrique (68) de l'arbre (40) et maintenu axialement à une extrémité par un écrou (78) vissé sur une partie filetée de la portée cylindrique (68) ou de la pièce annulaire (96, 120) et à son autre extrémité par un rebord radial (80) de l'arbre de transmission (40).

9. Turbomachine selon l'une des revendications 1 à 8, **caractérisée en ce que** les moyens d'amortissement sont montés de manière amovible autour de l'extrémité radialement externe de l'arbre de transmission (40).

10. Turbomachine selon la revendication 9, **caractérisée en ce que** les moyens d'amortissement sont montés dans un boitier amovible (58, 92) autour de l'extrémité radialement externe de l'arbre de transmission (40) et à l'intérieur d'une ouverture d'une structure fixe portée par le carter intermédiaire.

11. Procédé de transmission de puissance à des équipements ou accessoires d'une turbomachine, comprenant un carter intermédiaire (16) et des bras radiaux (26), telle qu'un turboréacteur ou un turbopropulseur d'avion, au moyen d'un arbre de transmission (40) s'étendant dans un bras radial (26) du carter intermédiare (16) et étant relié à un arbre moteur (31) par des moyens de liaison (30), **caractérisé en ce qu'**il consiste à faire tourner l'arbre de transmission à une vitesse supercritique et à amortir les vibrations lors de son fonctionnement à sa vitesse de résonance.

## Patentansprüche

1. Turbotriebwerk, enthaltend ein Zwischengehäuse (16), radiale Arme (26) und zumindest ein Kraftübertragungssystem, insbesondere für ein Turbotriebwerk, wie etwa ein Turbostrahltriebwerk oder Turboprop-Triebwerk für Flugzeuge, enthaltend eine Übertragungswelle (40), die sich in einem radialen Arm (26) des Zwischengehäuses (16) erstreckt und über Verbindungseinrichtungen (30), wie etwa Winkelgetriebe, mit einer Antriebswelle (31) verbunden ist und Ausstattungen bzw. Hilfseinrichtungen antreibt,
**dadurch gekennzeichnet, dass** die Übertragungswelle (40) dazu bestimmt ist, im überkritischen Bereich betrieben zu werden, und Dämpfungseinrichtungen zum Dämpfen von Schwingungen bei ihrer Resonanzdrehzahl enthält.

2. Turbotriebwerk nach Anspruch 1, **dadurch gekennzeichnet, dass** die Dämpfungseinrichtungen abnehmbar in einem Gehäuse (58, 92, 114) angebracht sind, das von einem festen Strukturelement getragen wird.

3. Turbotriebwerk nach Anspruch 2, **dadurch gekennzeichnet, dass** das Gehäuse (58, 92, 114) abnehmbar in einem Gehäuse (32) der Verbindungseinrichtungen zum Verbinden der Übertragungswelle (40) mit den anzutreibenden Ausstattungen bzw. Hilfseinrichtungen integriert ist.

4. Turbotriebwerk nach Anspruch 2 oder 3, **dadurch gekennzeichnet, dass** die Dämpfungseinrichtungen zum Dämpfen von Schwingungen einen Schwingungsdämpfer mit Ölfilmkompression enthalten.

5. Turbotriebwerk nach Anspruch 4, **dadurch gekennzeichnet, dass** der Schwingungsdämpfer mit Ölfilmkompression um zumindest ein Lager (70, 72) zum Führen der Übertragungswelle (40) herum ausgebildet ist.

6. Turbotriebwerk nach Anspruch 5, **dadurch gekennzeichnet, dass** der Ölfilm des Schwingungsdämpfers in einem Ringraum zwischen einer ringförmigen Innenfläche des abnehmbaren Gehäuses (58, 92, 114) und einem ringförmigen Teil (82, 96, 120) gebildet ist, das einen Außenring (84, 86) des Führungslagers umgibt.

7. Turbotriebwerk nach Anspruch 6, **dadurch gekennzeichnet, dass** der Ölfilm seitlich von zumindest zwei Ringdichtungen (88) eingegrenzt wird, die in ringförmige Aufnahmen des ringförmigen Teils und/oder des abnehmbaren Gehäuses (58) eingreifen.

8. Turbotriebwerk nach Anspruch 5 oder 6, **dadurch gekennzeichnet, dass** das Führungslager (70, 72) an eine zylindrische Lagerfläche (68) der Welle (40) eingreift und axial an einem Ende von einer Mutter (78) gehalten wird, die auf ein Gewindeteil der zylindrischen Lagerfläche (68) oder des ringförmigen Teils (96, 120) aufgeschraubt ist, und an seinem anderen Ende von einer radialen Randfläche (80) der Übertragungswelle (40) gehalten wird.

9. Turbotriebwerk nach einem der Ansprüche 1 bis 8, **dadurch gekennzeichnet, dass** die Dämpfungseinrichtungen abnehmbar um das radial äußere Ende der Übertragungswelle (40) herum angebracht sind.

10. Turbotriebwerk nach Anspruch 9, **dadurch gekennzeichnet, dass** die Dämpfungseinrichtungen in einem abnehmbaren Gehäuse (58, 92) um das radial äußere Ende der Übertragungswelle (40) herum und innerhalb einer Öffnung einer festen Struktur angebracht sind, die von dem Zwischengehäuse getragen wird.

11. Verfahren zur Kraftübertragung auf Ausstattungen oder Hilfseinrichtungen eines Turbotriebwerks mit einem Zwischengehäuse (16) und radialen Armen (26), wie etwa eines Turbostrahltriebwerks oder Turboprop-Triebwerks für Flugzeuge, mittels einer Übertragungswelle (40), die sich in einem radialen Arm (26) des Zwischengehäuses (16) erstreckt und über Verbindungseinrichtungen (30) mit einer Antriebswelle (31) verbunden ist,
**dadurch gekennzeichnet, dass** es darin besteht, die Übertragungswelle mit einer überkritischen Drehzahl zu drehen und Schwingungen während ihres Betriebs bei ihrer Resonanzdrehzahl zu dämpfen.

## Claims

1. A turbine engine comprising at least a power transmission system, in particular for a turbine engine such as an airplane turboprop or turbojet, the system comprising a transmission shaft (40) connected to a drive shaft (31) by connection means (30), e.g. such as bevel gears, and that drive equipment or accessories, the system being **characterized in that** the transmission shaft (40) is designed to operate under supercritical conditions and includes damper means for damping vibration at its resonant speed, and **in that** the transmission shaft (40) extends within a radial arm of an intermediate casing (16).

2. A turbine engine according to claim 1, **characterized in that** the damper means are mounted removably in a housing (58, 92, 114) carried by a stationary structural element.

3. A turbine engine according to claim 2, **characterized in that** the housing (58, 92, 114) is incorporated in removable manner in a housing (32) of the connection means for connecting the transmission shaft (40) to the equipment or the accessories it is to drive.

4. A turbine engine according to claim 2 or claim 3, **characterized in that** the vibration damper means comprise an oil film compression damper.

5. A turbine engine according to claim 4, **characterized in that** the oil film compression damper is formed around at least one bearing (70, 72) for guiding the transmission shaft (40).

6. A turbine engine according to claim 5, **characterized in that** the oil film of the damper is formed in an annular space between an inner annular surface of the removable housing (58, 92, 114) and an annular part (82, 96, 120) surrounding an outer ring (84, 86) of the guide bearing.

7. A turbine engine according to claim 6, **characterized in that** the oil film is confined laterally by at least two annular sealing gaskets (88) engaged in annular housings in the annular part and/or in the removable housing (58).

8. A turbine engine according to claim 5 or 6, **characterized in that** the guide bearing (70, 72) is engaged on a cylindrical bearing surface (68) of the shaft (40) and is held axially at one end by a nut (78) screwed onto a threaded portion of the cylindrical bearing surface (68) or of the annular part (96, 120), and at its other end by a radial rim (80) of the transmission shaft (40).

9. A turbine engine according to one of claims 1 to 8, **characterized in that** the damper means are mounted removably around the radially outer end of the transmission shaft (40).

10. A turbine engine according to claim 9, **characterized in that** the damper means are mounted in a removable housing (58, 92) around the radially outer end of the transmission shaft (40) and inside an opening in a stationary structure carried by the intermediate casing.

11. A method of transmitting power to equipment or accessories of a turbine engine such as an airplane turboprop or turbojet by means of a transmission shaft (40) connected to a drive shaft (31) by connection means (30), the method being **characterized in that** it consists in causing the transmission shaft to rotate at a supercritical speed and in damping vibration while it is operating at its resonant speed.
